(19) Europäisches Patentamt
European Patent Office
Office européen des brevets

(11) Numéro de publication: **0 252 860 B1**

# (12) FASCICULE DE BREVET EUROPEEN

(45) Date de publication de fascicule du brevet: **23.10.91**

(51) Int. Cl.[5]: **C08G 69/34**, C08G 69/28

(21) Numéro de dépôt: **87420173.4**

(22) Date de dépôt: **23.06.87**

Le dossier contient des informations techniques présentées postérieurement au dépôt de la demande et ne figurant pas dans le présent fascicule.

## (54) Procédé de préparation copolyamides à base d'hexamethylènediamin d'acide adipique, éventuellement d'au moins un autre diacide carboxylique à chaîne courte et d'acide et dacide dimère.

(30) Priorité: **08.07.86 FR 8610136**

(43) Date de publication de la demande: **13.01.88 Bulletin 88/02**

(45) Mention de la délivrance du brevet: **23.10.91 Bulletin 91/43**

(84) Etats contractants désignés: **AT BE CH DE ES FR GB GR IT LI LU NL SE**

(56) Documents cités:
**EP-A- 0 022 048**
**EP-A- 0 196 981**
**US-A- 3 329 633**

(73) Titulaire: **RHONE-POULENC CHIMIE**
**25, quai Paul Doumer**
**F-92408 Courbevoie Cédex(FR)**

(72) Inventeur: **Coquard, Jean**
**Route du Crest Grezieu La Varenne**
**F-69290 Craponne(FR)**
Inventeur: **Goletto, Jean**
**24 Chemin des Mouilles**
**F-69130 Ecully(FR)**

(74) Mandataire: **Trolliet, Maurice et al**
**RHONE-POULENC INTERSERVICES Service Brevets Chimie Centre de Recherches des Carrières B.P. 62**
**F-69192 Saint-Fons Cédex(FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un procédé de préparation de copolyamides homogènes, ayant à la fois un point de fusion élevé et une bonne souplesse, à partir d'hexaméthylènediamine, d'acide adipique pris seul ou en mélange avec au moins un autre diacide carboxylique à chaîne courte et d'un dimère d'acide gras, la quantité de diacide(s) court(s) par rapport à la quantité totale des acides présents [acide(s) court(s) + acide dimère] se situant dans l'intervalle allant de 50 à 99 % en mole.

Des copolyamides de cette nature à base d'hexaméthylènediamine, d'acide adipique et d'acide dimère sont déjà décrits par la demanderesse dans le brevet français 2 459 810. Par copolyamide homogène, on entend définir un copolymère ne présentant qu'une seule phase à l'état fondu ou une seule phase amorphe à l'état solide ainsi qu'on peut le constater, par exemple, par microscopie électronique de balayage révélant l'éventuelle phase dispersée par fixation d'acide phosphotungstique.

Un moyen beaucoup plus simple pour constater cette homogénéité consiste à observer l'état de transparence d'une part d'une masse fondue ayant environ de 0,2 à 0,5 cm d'épaisseur chauffée à une température supérieure d'au moins 10 °C à son point de fusion et d'autre part d'un film ou jonc de faible diamètre obtenu à partir de cette masse fondue après refroidissement rapide par exemple par immersion dans l'eau à température ambiante. Un film ou jonc absolument transparent indique une homogénéité parfaite du polymère ; si le film a une épaisseur plus importante ou si le refroidissement a été plus lent, une zone translucide peut être le signe d'une certain cristallinité ; un film blanc comportant des traînées ou des inclusions (oeils par exemple) est le signe d'une hétérogénéité importante. Cette homogénéité fait que les copolymères en question présentent, outre de bonnes propriétés de transparence, des propriétés thermomécaniques qui sont facilement reproductibles. Par copolyamide ayant une bonne souplesse, on entend définir un copolyamide dont le module en flexion sera sensiblement inférieur à celui des polyamides conventionnels comme le polyhexaméthylènadipamide (nylon 66) ou le polycaprolactame (nylon 6) et sera de l'ordre ou inférieur à celui des polyamides considérés comme souples tel que par exemple le polyundécanamide (nylon 11).

Dans le type de copolyamides de cet art antérieur, la cristallinité et par conséquent la faculté d'obtenir des points de fusion élevés et de bonnes propriétés thermomécaniques sont essentiellement apportées par l'ensemble des segments qui derivent de la condensation des molécules d'acide court (acide adipique) sur une partie des molécules d'hexaméthylènediamine. La faculté d'avoir la souplesse et une bonne elasticité est essentiellement apportée par l'ensemble des segments qui dérivent de la condensation des molécules de dimère d'acide gras sur l'autre partie des molécules d'hexaméthylènediamine. Il va de soi qu'en faisant varier la quantité d'acide court par rapport à la quantite totale des acides présents dans l'intervalle allant de 50 à 99 % en mole, on obtient des copolyamides dont le point de fusion sera plus ou moins élevé et dont la souplesse sera plus ou moins grande. Les copolyamides dont la quantité d'acide court se situe dans l'intervalle allant de 70 à 90 % en mole présentent un intérêt particulier car ils sont à la fois un point de fusion élevé et une excellente souplesse.

Dans le brevet français précité, on décrit encore plusieurs procédés spécifiques permettant de préparer de pareils copolyamides homogènes. Selon un premier procédé, on réalise les étapes suivantes :

1. on prépare en milieu hétérogène des prépolymères à partir d'un mélange d'acide adipique, d'acide dimère et d'hexaméthylènediamine ou de leurs sels correspondants, les quantités des constituants du mélange de départ étant telles que la quantité d'acide adipique par rapport aux acides totaux se situe dans l'intervalle allant de 50 à 99 % en moie et que les teneurs en groupements aminés et en groupements carboxyliques ne diffèrent pas de plus de 5 % en valeur absolue, la réaction de polymérisation consistant, dans un intervalle de temps allant de 30 minutes à plusieurs heures, à amener de façon progressive et régulière le mélange de départ par chauffage jusqu'à 270 °C sous une pression de vapeur d'eau comprise entre 1,3 et 2,5 MPa ce qui est l'état d'équilibre chimique correspondant au début de la phase (2) suivante ;
2. On effectue ensuite une phase d'homogénéisation d'une durée comprise entre 0,5 et 5 heures, à une température comprise entre 270 et 290 °C sous une pression de vapeur d'eau comprise entre 1,3 et 2,5 MPa pendant laquelle l'état d'équilibre des réactions d'amidification n'est pas modifié ;
3. et l'on procède enfin à une polycondensation de façon à transformer les prépolymères homogènes ainsi obtenus en copolyamides souhaités, la réaction de polycondensation étant opérée de manière classique à une température comprise entre 260 et 290 °C sous pression atmosphérique ou sous une pression inférieure, pendant une durée allant de 30 minutes à plusieurs heures.

Selon un second procédé, on réalise les étapes suivantes :

1. on prépare en milieu hétérogène des prépolymères à partir d'un mélange d'acide adipique, d'acide dimère et d'hexaméthylènediamine ou de leurs sels correspondants, les quantités des constituants du

mélange de départ étant telles que la quantité d'acide adipique par rapport aux acides totaux se situe dans l'intervalle allant de 50 à 99 % en mole et que les teneurs en groupements aminés et en groupements carboxyliques diffèrent de plus de 5 % en valeur absolue, la réaction de prépolymérisation consistant, dans un intervalle de temps allant de 30 minutes à plusieurs heures, à amener de façon progressive et régulière le mélange de départ à une température correspondant au début de la phase (2) suivante ;

2. on effectue ensuite une phase d'homogénéisation d'une durée comprise entre 10 minutes et 2 heures à une température comprise entre 265 et 290 °C;

3. et l'on procède enfin à l'addition progressive du réactif en défaut de manière classique et l'on achève la polycondensation à des températures comprises entre 260 et 290 °C sous pression atmosphérique ou sous une pression inférieure pendant une durée allant de 30 minutes à plusieurs heures jusqu'à l'obtention des copolyamides souhaités.

Enfin, selon un troisième procédé, on prépare de façon directe à une température comprise entre 150 et 300 °C, en milieu homogène, des copolymères à partir d'un mélange d'acide adipique, d'acide dimère et d'hexaméthylènediamine, la quantité d'acide adipique par rapport aux acides totaux se situant dans l'intervalle allant de 50 à 99 % en mole et les teneurs en groupements aminés et en groupements carboxyliques ne différant pas de plus de 5 % en valeur absolue, le milieu étant rendu homogène par l'utilisation d'un tiers solvant du mélange des trois produits de départ ou des sels correspondants et/ou des oligomères d'acide adipique et d'hexaméthylènediamine et d'acide dimère et d'hexaméthylènediamine de masse moléculaire inférieure à 5000, ledit solvant étant inerte vis-à-vis des réactifs et des réactions d'amidification.

Poursuivant des travaux dans ce domaine de la technique, la Demanderesse a montré dans l'EP-A-196.981 (publié postérieurement à la date de priorité dont bénéficie la présente invention) qu'il est possible de préparer les copolyamides homogènes en faisant appel à un quatrième procédé permettant de s'affranchir :

- de la mise en oeuvre de l'étape intermédiaire d'homogénéisation à température élevée qui est de nature à augmenter exagérément la durée d'occupation des réacteurs industriels et à entraîner prématurément une certaine dégradation des copolyamides,
- et de la mise en oeuvre d'un solvant organique dont la récupération est de nature à pouvoir créer des difficultés complémentaires.

Selon ce quatrième procédé conforme à l'EP précité, on prépare dans une première étape un propolymère déséquilibré, ayant des groupements terminaux $NH_2$, à partir d'hexaméthylènediamine en excès et d'un acide court comme l'acide adipique en faisant avancer la polycondensation en éliminant l'eau présente dans le mélange réactionnel par distillation sous une pression autogène appropriée, puis dans une seconde étape on fait réagir le prépolymère obtenu avec l'acide dimère.

On a déjà décrit dans l'US-A-3.329.633 un procédé où l'acide dimère est ajouté après la formation d'un polymère d'hexaméthylènediamine et d'acide adipique, mais dans cet art antérieur le polymère en question est équilibré, c'est-à-dire qu'il comporte des groupements terminaux $NH_2$ et COOH en nombres équivalents, et on a constaté que cette structure équilibrée conduit après addition de l'acide dimère à un copolyamide hétérogène.

La Demanderesse a maintenant trouvé un cinquième procédé de préparation de copolyamides homogènes, à base d'hexaméthylènediamine, d'acide(s) court(s) et d'un acide dimère, qui ne fait pas appel à la mise en oeuvre d'une étape intermédiaire d'homogénéisation ou d'un solvant organique. Ce cinquième procédé présente, comme le quatrième procédé, deux étapes distinctes dont une première étape de préparation d'un prépolymère déséquilibré, mais cette première étape est conduite maintemant sans opérer de distillation.

Plus spécifiquement, la présente invention concerne un procédé de préparation de copolyamides homogènes, ayant à la fois un point de fusion élevé et une bonne souplesse, à partir d'hexaméthylènediamine, de diacide(s) carboxylique(s) à chaîne courte et d'un dimère d'acide gras, la quantité d'acide(s) court(s) par rapport à la quantité totale des acides présents se situant dans l'intervalle allant de 50 à 99 % en mole, ledit procédé étant caractérisé par les points suivants :

- dans une première étape (a), on prépare un prépolymère à groupements terminaux aminés en faisant réagir, en présence ou non d'eau au départ de cette étape, les composés consistant :
  - (i) soit le mélange des constituants suivants : acide adipique, éventuellement au moins un autre diacide carboxylique à chaîne courte de nature cycloaliphatique saturée ou aromatique, hexaméthylènediamine et un catalyseur consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante

d'ionisation pKa dans l'eau à 25 °C égale ou inférieure à 4, (béta) désignant un sel alcalin ou alcalino-terreux de cet acide,

- (ii) soit dans le mélange des constituants suivants : sel(s) stoechiométrique(s) d'acide(s) court(s) précité(s) et d'hexaméthylènediamine, hexaméthylènediamine libre et le catalyseur défini ci-avant,

cette première étape (a) étant conduite sans opérer de distillation d'eau dans un système clos du type autoclave dans les conditions suivantes :

. la quantité d'eau présente au départ dans le mélange réactionnel, quand il y en a, exprimée en pourcentage en poids par rapport à la quantité totale eau présente au départ + réactifs, est au plus égale à 45 %,

. on amène progressivement par chauffage le mélange de départ à une température se situant dans l'intervalle allant de 200 à 250 °C et on laisse réagir les réactif à cette température et sous une pression autogène supérieure à la pression atmosphérique pendant une durée suffisante pour permettre d'amener le mélange réactionnel à l'état d'équilibre chimique des réactions d'amidification correspondant au début de l'étape (b) suivante ;

- dans une seconde étape (b), on fait réagir le prépolymère obtenu avec le dimère d'acide gras, qui est ajouté progressivement dans le mélange réactionnel, en respectant les points suivants :

. on opère à une température se situant dans l'intervalle allant de 200 à 280 °C,

. on opère sous une pression autogène qui, pendant le période d'addition de l'acide dimère, est égale à la pression de prépolymérisation (cas a) ou est supérieure à cette pression (cas b) ou décroît progressivement de la pression de prépolymérisation jusqu'à la pression atmosphérique (cas c) et qui, après l'addition de l'acide dimère, décroit progressivement jusqu'à une valeur pouvant être la pression atmosphérique (pour les cas a et b) ou une pression inférieure à cette dernière (pour les cas a, b et c) ou reste égale à la pression atmosphérique (pour le cas c), . on assure une distillation simultanée d'eau d'une part éventuellement pendant la période d'addition de l'acide dimère et d'autre part pendant la période suivant l'addition de l'acide dimère,

. on veille à ce que à la fin de la période d'addition de l'acide dimère, au besoin au éliminant par distillation de l'eau pendant la période d'addition de l'acide dimère, le rapport $r_1$ ci-après défini :

$$\frac{\text{poids réactifs de l'étape (a) + poids acide dimère}}{\text{poids réactifs de l'étape (a) + poids acide dimère + poids d'eau résiduelle}}$$

présente une valeur se situant dans l'intervalle allant de 0,915 à 1,

. et on fait réagir l'acide dimère, une fois ce dernier complètement engagé, pendant une durée suffisante pour obtenir un copolyamide de viscosité souhaitée,

- les proportions des divers constituants sont telles que :
  - la quantité d'acide(s) court(s) par rapport à l'ensemble acide(s) court(s) + acide dimère va de 50 à 99 % en mole,
  - le rapport $r_2$ du nombre de moles d'hexaméthylènediamine mises en oeuvre dans l'étape (a), alternative (i), par rapport au nombre total de moles d'acide(s) court(s) et d'acide dimère est égal à 1 ou éventuellement égal à une valeur, supérieure à la stoechiométrie, déterminée de manière à introduire dans le mélange réactionnel un excès d'hexaméthylènediamine permettant de compenser la perte de ce réactif qui peut intervenir lors de l'étape (b) pendant la décompression,
  - le rapport $r_3$ du nombre de moles d'hexaméthylènediamine libre mises en oeuvre dans l'étape (a), alternative (ii), par rapport au nombre de moles d'acide dimère possède les valeurs indiquées ci-avant pour le rapport $r_2$.

Un procédé conforme à la présente invention qui est préféré est celui consistant à enchaîner les étapes (a) et (b) telles que définies ci-avant mais avec une présence d'eau dans le mélange réactionnel au départ de l'étape (a), la quantité d'eau présente au départ étant comme indiqué ci-avant au plus égale à 45 %.

Dans le présente mémoire, le pression dont on parle est toujours la pression absolue.

Par "eau présente au départ dans le mélange réactionnel", on entend définir l'eau qui est introduite au départ dans le mélange réactionnel de l'étape (a) à côté des réactifs, plus éventuellement l'eau de dissolution des réactifs engagés sous forme de solution. L'expression "réactifs" englobe ici le (ou les) diacide(s) court(s), l'hexaméthylènediamine et le catalyseur et, en absence d'indication contraire, il s'agit de

corps à l'état sec.

On considère comme "eau résiduelle" : soit la quantité d'eau présente au départ de l'étape (a), lorsqu'on n'a pas distillé d'eau jusqu'à la fin de l'addition de l'acide dimère, soit, lorsque de l'eau a été distillée pendant l'addition de l'acide dimère, la différence : quantité d'eau présente au départ - quantité d'eau distillée jusqu'à la fin de l'addition de l'acide dimère.

Il est bien entendu que, si l'étape (a) est conduite sans présence d'eau au départ de cette étape, la période d'addition de l'acide dimère se déroulera sans opérer de distillation d'eau et la quantité d'eau résiduelle sera nulle et le rapport $r_1$ dont on a parlé ci-avant sera égal à 1. De même ce rapport sera égal à 1 lorsque la quantité d'eau distillée jusqu'à la fin de l'addition de l'acide dimère correspond à la quantité d'eau présente au départ de l'étape (a).

Par "copolyamide de viscosité souhaitée", on entend définir un copolyamide ayant une viscosité à l'état fondu suffisamment élevée pour pouvoir être injecté ou extrudé de façon convenable. Plus précisément, on entend définir un copolyamide ayant une viscosité à l'état fondu (mesurée dans les conditions définies ci-après) au moins égale à 1 500 poises et de préférence comprise entre 3 000 et 60 000 poises.

A propos de la perte d'hexaméthylènediamine dont on a parlé ci-avant, elle peut intervenir par exemple lorsque l'appareillage utilisé ne comporte pas de colonne de distillation ; dans ces conditions, pour un appareillage donné et pour des charges données, on peut connaître à l'aide de techniques simples la quantité d'hexaméthylènediamine entraînée lors de chaque opération et par conséquence l'excès de ce réactif à introduire dans le mélange réactionnel de départ pour conserver l'équivalence entre les groupements amino et les groupements carboxy qui réagissent. De manière générale, quand il y a perte d'hexaméthylènediamine, elle est très modérée et il s'agit là d'un des avantages du procédé selon la présente invention ; on a constaté que l'emploi de quantités de ce réactif conduisant pour les rapports $r_2$ et $r_3$ à des valeurs allant d'un nombre supérieur à 1 à 1,1 conviennent bien. La perte d'hexaméthylène diamine, exprimée en pourcentage en poids par rapport à la quantité totale de diamine engagée se situe généralement à des valeurs inférieures à I % et peut même atteindre des valeurs aussi basses que celles inférieures à 0,3 %.

Il est bien entendu que par "acide(s) court(s)", on veut désigner l'acide adipique pris seul ou en mélange avec au moins un autre diacide carboxylique à chaîne courte de nature cycloaliphatique saturée ou aromatique. Plus précisément, les diacides carboxyliques cycloaliphatiques et/ou aromatiques pouvant entrer dans le cadre de la présente invention sont des composés ayant au plus 12 atomes de carbone ; comme diacides de ce type qui conviennent bien, on citera : l'acide cyclohexanedicarboxylique-1,4, l'acide isophtalique, l'acide téréphtalique. La proportion d'acide adipique, dans le mélange de diacides courts qui peut être mis en oeuvre, représente habituellement au moins 70 % en mole.

Pendant l'étape d'homogénéisation mise en oeuvre dans le brevet français précité, on pense que les groupements amino et carboxy, qui ne subissent plus à ce moment là de réaction d'amidification, servent à faire des coupures des oligomères blocs d'acides adipique et d'hexaméthylènediamine et/ou des oligomères d'acide dimère et d'hexaméthylènediamine et qu'il se forme en conséquence un prépolymère statistique homogène. Dans le procédé conforme à la présente invention, on pense que le prépolymère formé dans l'étape (a) est sous la forme d'une structure polyhexaméthylène amide préformée homogène dont l'homogénéité, de façon surprenante, n'est pas modifiée par l'ajoute subséquent d'acide dimère dont les oligomères avec l'hexaméthylènediamine sont pourtant incompatibles avec ceux du polyhexaméthylène amide préformé.

Les acides dimères employés sont obtenus par polymérisation de composés comprenant 80 à 100 % en poids d'acide(s) gras monomère(s) gras monomère(s) ayant de 8 à 15 atomes de carbone et/ou de 21 à 24 atomes de carbone. Par acides gras monomères, on entend désigner des monoacides aliphatiques saturés ou insaturés, linéaires ou ramifiés.

Parmi les acides gras monomères saturés linéaires ou ramifiés, on peut citer : les acides caprylique, pélargonique, caprique, laurique, myristique, palmitique et isopalmitique, stéarique, archidique, behénique et lignocérique.

Parmi les acides gras monomères à insaturation(s) éthylènique(s) linéaires ou ramifiés on peut citer : les acides 3-octénoïque, 11-dodécénoïque, oléique, lauroléique, myristoléique, palmitoléique, gadoléique, cétoléique, linoléique, linolénique, eicosatétraenoïque et chaulmoogrique. Certains acides à insaturation acétylénique peuvent aussi conduire à des acides polymères, mais ils n'existent pas de façon intéressante à l'état naturel et de ce fait leur intérêt économique est très faible.

Les acides gras polymères obtenus par polymérisation à la chaleur, en présence éventuellement de catalyseurs comme des peroxydes ou des acides de Lewis, peuvent être fractionnés par exemple par des techniques classiques de distillation sous vide ou d'extraction par des solvants. On peut aussi les hydrogéner pour réduire leur taux d'insaturation et ainsi réduire leur coloration.

Les acides dimères utilisés de préférence dans la présente invention sont des acides gras polymères fractionnés dans lesquels la fraction en acide difonctionnel est supérieure à 94 % en poids, la fraction en acide monofonctionnel est inférieure à 1 % en poids et plus préférentiellement encore égale ou inférieure à 0,5 % en poids, la fraction en acide de fonctionnalité supérieure à 2 est inférieure à 5 % en poids et plus préférentiellement encore égale ou inférieure à 3 % en poids.

Les acides dimères utilisés plus préférentiellement encore sont les espèces obtenues par fractionnement (conduisant aux fractions indiquées ci-avant) d'acides gras polymères ayant subi en plus une hydrogénation.

Les acides dimères qui conviennent tout spécialement bien sont les espèces obtenues par fractionnement d'une composition hydrogénée issue de la polymérisation catalytique d'acide(s) gras monomère(s) ayant 18 atomes de carbone. Dans ce contexte, en raison de leur facilité d'approvisionnement et de leur polymérisation relativement aisée, les acides oléique, linoléique et linolénique, pris seuls ou deux à deux ou de préférence sous forme de mélange ternaire, sont les produits de départ tout particulièrement préférés pour la préparation des acides gras polymères.

Pour ce qui est de l'oxyacide minéral ou organique fort (alpha) qui est engagé comme catalyseur, on fait appel, comme il est indiqué ci-avant, à un mono- ou un polyacide oxygéné dont l'une au moins des fonctions acides possède une constante d'ionisation pka dans l'eau à 25 °C égale ou inférieure à 4.

Comme acides forts qui conviennent ou peut citer par exemple:

- parmi les oxyacides minéraux, les acides sulfureux, sulfurique, hypophosphoreux, phosphoreux, orthophosphorique ou pyrophosphorique ;
- parmi les oxyacides organiques ;
  - les acides organosulfoniques de formule $R_1$--$SO_3H$ (I) dans laquelle $R_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;
  - les acides organophosphoniques de forme $R_2$ - P(O)$(OH)_2$ (II) dans laquelle $R_2$ représente un radical alkyle, un radical phényle où un radical phénylalkyle, chacun de ces radicaux ayant la définition donnée ci-avant pour $R_1$ ;
  - les acides organophosphiniques de formule $R_3R_4$ - P(O)(OH) (III) dans laquelle $R_3$ et $R_4$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;
  - les acides organophosphoneux de forme $R_5H$ - P(O)(OH) (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phényalkyle, chacun de ces deux derniers radicaux ayant la définition donnée ci-avant pour $R_1$.

On préfère utiliser comme acide fort (alpha), les acides dérivés du phosphore et plus particulièrement les acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

Pour ce qui est du sel d'acide (béta), on fait appel généralement à des sels de métaux alcalins ou de métaux alcalino-terreux dérivés des oxyacides minéraux ou organiques (alpha).

On préfère utiliser comme sel (béta), ceux qui sont totalement solubles dans le mélange réactionnel. Parmi ces sels (béta) préférés, conviennent bien les sels de sodium et de potassium issus des types particuliers d'oxyacides minéraux ou organiques (alpha) qui conviennent cités ci-avant. Les sels (béta) qui conviennent tout particulièrement bien sont les sels de sodium et de potassium issus des acides préférés dérivés du phosphore cités nommément ci-avant.

Les proportions d'acide fort (alpha) ou de sel (béta), exprimées en pourcentage en poids par rapport au copolyamide final, sont comprises généralement entre 0,01 et 1 % et de préférence entre 0,01 et 0,5 %. Les acides forts (alpha) ou leurs sels (béta) et notamment les composés de ce type dérivés du phosphore présentent, outre un effet catalytique lors de la réaction de polycondensation, l'intérêt d'apporter une certaine protection du copolyamide final contre la dégradation par la lumière.

Si on veut assurer une bonne marche du procédé selon la présente invention, ou aura soin de respecter notamment de façon la plus parfaite possible les proportions respectives des différents constituants mis en oeuvre. Selon une modalité préférée de mise en oeuvre, on engage dans l'étape (a) le (ou les) diacide(s)

court(s) sous forme de son (ou de leurs) sel(s) avec l'hexaméthylènediamine (alternative ii). Pour réaliser d'une part la stoechiométrie dans la fabrication du (ou des) sel(s) d'acide(s) court(s) et d'hexaméthylènediamine et d'autre part la stoechiométrie ou le dépassement voulu de la stoechiométrie entre l'hexaméthylènediamine libre et l'acide dimère on peut opérer par pesée précise des réactifs de titre parfaitement connu au moment de la mise en oeuvre. Il est possible de contrôler la stoechiométrie du (ou des) sel(s) d'acide(s) court(s) par mesure du pH de solutions échantillons obtenues par dilution du (ou des) sel(s) dans un solvant approprié. Il est possible encore de contrôler la stoechiométrie ou le dépassement voulu de stoechiométrie dans la réaction d'amidification entre les groupes amino libres du prépolymère et l'acide dimère par règlage de la viscosité qui peut être évaluée avantageusement par mesure in-situ du couple résistant de l'agitation mécanique du milieu de polycondensation de l'étape (b).

Pour la conduite du procédé selon l'invention, on peut engager l'hexaméthylènediamine à l'état solide, à l'état fondu ou sous forme de solution aqueuse. Le (ou les) sel(s) d'acide(s) court(s) et d'hexaméthylènediamine peut (ou peuvent) être engagé(s) également à l'état solide, à l'état fondu ou sous forme de solution aqueuse.

A propos de la conduite de l'étape (a) du procédé préféré selon l'invention [opéré en présence d'eau au départ de l'étape (a)], la quantité d'eau présente au départ dans le mélange réactionnel est de préférence située dans l'intervalle allant de 5 à 45 % et, plus préférentiellement encore, allant de 9 à 40 % et on laisse préférentiellement réagir les réactifs à une température se situant dans l'intervalle allant de 205 à 230 °C pendant une durée dépendant de la température choisie allant par exemple de 20 minutes (lorsque la température choisie est de 230 °C) à 2 heures (lorsque la température choisie est de 205 °C) sous une pression autogène allant de 1,1 à 3 MPa.

A propos de la conduite de l'étape (b) qui suit l'étape (a) conduite de la manière préférée indiquée ci-avant, on opère préférentiellement en enchaînant les étapes suivantes :

- on introduit progressivement, pendant une durée allant par exemple de 10 minutes à 2 heures, la totalité de l'acide dimère en respectant les points suivants :
  . la température du mélange réactionnel est maintenue égale à la température de prépolymérisation,
  . la pression est maintenu égale à la pression de prépolymérisation ou est élevée à une valeur qui est supérieure de 5 à 40 % à la pression de prépolymérisation,
  . on s'assure, éventuellement en éliminant de leau par distillation, que le rapport $r_1$ défini ci-avant présente, à la fin de la période d'addition de l'acide dimère, une valeur se situant dans l'intervalle allant de 0,930 à 1,
- l'addition précitée d'acide dimère étant terminée, après avoir éventuellement continué l'agitation du mélange réactionnel sous la pression précitée pendant une durée allant, par exemple, de 10 minutes à 1 heure en élevant éventuellement dans le même temps la température à une valeur supérieure à celle mise en oeuvre pendant la période d'addition de l'acide dimère et se situant dans l'intervalle allant d'une valeur supérieure à 205 à 240 °C, on réalise ensuite les opérations suivante :
  . on abaisse progressivement, pendant une durée allant par exemple de 10 minutes à 2 heures, la pression de la valeur mise en oeuvre pendant la période d'addition de l'acide dimère jusqu'à la valeur de la pression atmosphérique,
  . on élève dans le même temps la température du mélange réactionnel à une valeur supérieure à la température qui est soit celle mise en oeuvre pendant la période d'addition de l'acide dimère, soit celle atteinte en fin de période éventuelle de surchauffage qui suit immédiatement la période d'addition de l'acide dimère, cette température une fois élevée se situant dans l'intervalle allant d'une valeur supérieure à 205 °C à 280 °C,
  . on assure encore dans le même temps une distillation régulière d'eau,
  . et on établit ensuite progressivement, pendant une durée allant par exemple de 5 minutes à 1 heure, une pression réduite égale ou inférieure à $600.10^2$ Pa,
  . puis on termine la polycondensation en continuant à agiter le milieu à la température précitée se situant dans l'intervalle allant d'une valeur supérieure à 205 °C à 280 °C, sous la pression réduite indiquée ci-avant, pendant une durée allant par exemple de 10 minutes à 1 heure tout en assurant encore une distillation simultanée d'eau.

On peut incorporer sans inconvénient dans le milieu de préparation des copolyamides obtenus conformément au présent procédé un ou plusieurs additifs tels que notamment : des stabilisants et des inhibiteurs de dégradation par oxydation, par l'ultraviolet, par la lumière ou par la chaleur ; des lubrifiants ; des matières colorantes ; des agents de nucléation ; des agents anti-mousses ; des charges minérales.

Il est bien entendu, dans le cas où le mélange réactionnel de l'étape (a) présenterait au départ une quantité d'eau supérieure à 45 %, que l'on peut réaliser dans un premier temps, avant de commencer l'étape (a), une opération de concentration du milieu réactionnel, par exemple par distillation d'eau à

pression atmosphérique ou sous pression réduite et dans des conditions de températures basses ne permettant absolument pas le développement de réactions d'amidification, de façon à amener la quantité d'eau présente au départ de l'étape (a) à la valeur indiquée au plus égale à 45 %.

Le procédé selon l'invention permet d'obtenir des copolyamides homogènes présentant à la fois une bonne résistance thermo-mécanique due à leurs points de fusion élevés et une souplesse améliorée. Etant parfaitement homogènes, ils ont des propriétés de transparence améliorées et peuvent être mis en oeuvre selon les techniques usuelles d'injection, extrusion ou filage pour donner des objets conformés : pièces, films ou fils de très grande régularité.

Les exemples qui suivent illustrent de manière non limitative comment la présente invention peut être mise en pratique.

Dans ces exemples un certain nombre de contrôles sont effectués. De même, diverses propriétés sont mesurées. On indique ci-après les modes opétatoires et/ou les normes selon lesquelles ces contrôles et mesures sont effectués.

- ANALYSE MICROCALORIMETRIQUE :

On caractérise les polymères par les caractéristiques de fusion telles que les endothermes de fusion Ef et les exothermes de cristallisation Ec.

Ces déterminations sont effectuées sur un échantillon soumis à des variations de température tant en montée qu'en descente de 10 °C/minute. On détermine ainsi une courbe par microcalorimétrie différentielle sur laquelle on peut repérer les points de fusion (Tf) et de cristallisation au refroidissement (Tc).

- VISCOSITE A L'ETAT FONDU :

Elle est mesurée à 260 °C sous un gradient de cisaillement variable (indiqué ci-après dans les exemples) à l'aide d'un rhéomètre DAVENPORT. Les résultats sont exprimés en poises.

- DETERMINATION DES GROUPEMENTS TERMINAUX SUR COPOLYAMIDE :

La méthode décrite ci-après permet de doser les deux types de groupements terminaux sur une seule prise d'essai et avec un seul titrage acidimétrique. Le polyamide est mis en solution à température ambiante sous agitation dans un mélange trifluoroéthanol/chloroforme. Après dissolution on ajoute une solution hydroalcoolique d'hydroxyde de tétrabutylammonium 0,05 N et l'on réalise enfin un titrage potentiométrique par une solution titrée d'acide chlorhydrique 0,05 N sous balayage d'azote. L'exploitation de la courbe potentiométrique présentant deux sauts de potentiel permet la détermination des deux types de groupements terminaux.

- DETERMINATION DES CARACTERISTIQUES MECANIQUES EN TRACTION :

Elles sont déterminées à 25 °C sur des éprouvettes conditionnées à EHO selon la norme NF T 51 034 (vitesse de traction de 10 mm/min sur dynamomètre de type INSTRON). Conditionnement à EHO : les éprouvettes sont placées en dessicateur sur silicagel et séchées 24 heures à température ambiante sous 0,66 à $1,33.10^2$ Pa avant de réaliser les mesures.

- MODULE EN TORSION :

Il est déterminé à plusieurs températures (-20 °C, 0 °C, +20 °C, +40 °C, +60 °C) au pendule automatique de torsion sous une fréquence de l'ordre de 1 Hertz selon la norme ISO R 537. Les éprouvettes sont conditionnées à EHO. Les résultats sont exprimés en MPa.

- DETERMINATION DE LA PERTE EN HEXAMETHYLENEDIAMINE :

On effectue un dosage à la fin de l'étape (b) sur une partie aliquote de l'ensemble du distillat aqueux recueilli. On réalise un titrage potentiométrique par une solution titrée d'acide chlorhydrique 0,1 N. La perte en hexaméthylènediamine s'exprime en pourcentage en poids par rapport à la quantité totale de diamine engagée [diamine libre + éventuellement diamine entrant dans la constitution du (ou des) sel(s) d'acide(s) court(s)].

Dans les exemples qui suivent, s'agissant de l'acide dimère mis en oeuvre, on fait appel à un composé

mis dans le commerce par la Société UNICHEMA CHEMIE sous la marque déposée PRIPOL 1 010 dans lequel la fraction en acide difonctionnel est supérieure à 95 % en poids. Cette fraction en acide difonctionnel consiste en un mélange d'isomères ayant 36 atomes de carbone dont l'espèce prépondérante est une composé saturé de formule :

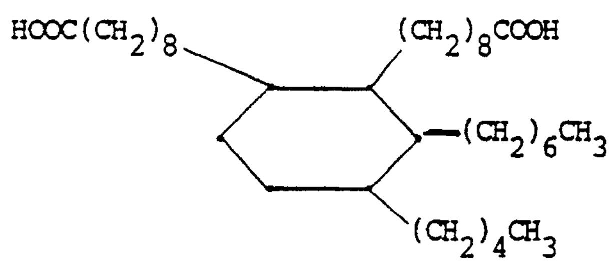

La fraction en acide monofonctionnel (doit le taux pondéral sera précisé ultérieurement) est constituée essentiellement par de l'acide oléique ; quant à la fraction en acide de fonctionnalité supérieure à 2 (dont le taux pondéral sera précisé également ultérieurement), elle est constituée essentiellement par un mélange de trimères isomères ayant 54 atomes de carbone ; la masse moléculaire moyenne de cet acide dimère est de l'ordre de 571.

**EXEMPLES**

EXEMPLE 1

On opère dans un autoclave en acier inoxydable de 7,5 litres muni d'une agitation méanique, d'un système de chauffage et d'un système permettant de travailler sous une pression supérieure ou inférieure à la pression atmosphérique. L'installation comprend également un dispositif permettant d'introduire dans l'autoclave, sous pression, un réactif liquide et un dispositif permettant d'éliminer de l'eau.

Etape (a) :

On introduit à température ambiante dans l'appareil les charges suivantes :
- sel à l'état solide et sec d'acide adipique et d'hexaméthylènediamine en proportions équimolaires : 2086,7 g (7,955 moles),
- eau permutée : 1048 g,
- hexaméthylènediamine en solution aqueuse à 32,5 % en poids : 746,5 g, soit 242,6 g d'hexaméthylènediamine pure (2,088 moles) et 503,9 g d'eau de dissolution,
- acide hypophosphoreux en solution aqueuse à 50 % en poids : 6 g, soit 3 g d'eau de dissolution,
- antimousse silicone commercialisé par la Sté RHONE-POULENC SPECIALITES CHIMIQUES sous la marque déposée RHODORSIL Si 454 : 0,2 g.

Pour ces charges la quantité d'eau présente au départ dans le mélange réactionnel est égale à 1554,9 g et elle représente 40 % en poids de l'ensemble : eau présente au départ + réactifs.

L'agitation est mise en route et on effectue 5 purges à l'azote par mise sous pression de $7.10^5$ Pa, puis décompression. La température de la masse agitée est élevée progressivement en 1 heure jusqu'à 210 °C (pression autogène de 1,8 MPa) et on laisse réagir les réactifs dans ces conditions pendant 1 heure.

Etape (b):

En maintenant les conditions de température et de pression précitées, on introduit dans le milieu agité, par coulée régulière en 1 heure 10 minutes, 1140 g (1,996 moles) de dimère d'acide gras commercialisé sous la marque déposée PRIPOL 1010 par la Société UNICHEMA CHEMIE ayant un taux de monomère de 0,03 % en poids et un taux de trimère de 3 % en poids ; pendant le temps d'addition de l'acide dimère, on assure une distillation régulière d'eau avec des conditions de débit permettant de recueillir 1320 g d'eau à la fin de l'addition de l'acide dimère.

A la fin de l'addition de l'acide dimère le poids d'eau résiduelle est de 234,9 g et le rapport $r_1$ défini ci-avant dans le présent mémoire présente une valeur égale à 0,937.

La distillation d'eau est poursuivie un peu pendant 30 minutes pour atteindre sous une pression de 1,8

MPa une température de 230 °C.

L'autoclave est ensuite décomprimé progressivement, pendant une durée de 90 minutes, jusqu'à la pression atmosphérique et la température est élevée progressivement dans le même temps jusqu'à 260 °C tout en continuant à assurer une distillation régulière d'eau.

On établit ensuite progressivement en 30 minutes une presion de $120.10^2$ Pa tout en maintenant la masse à 260 °C et on termine la polymérisation en continuant à agiter le milieu à 260 °C sous $120.10^2$ Pa pendant 20 minutes tout en assurant encore une distillation régulière d'eau.

La perte en hexaméthylènediamine mesurée en fin de l'étape (b) est de 0,29 %.

L'agitation est arrêtée, puis on établit dans l'autoclave une pression d'azote de $5.10^5$ Pa et on soutire le polymère. Ce dernier extrudé de l'autoclave sous forme de jonc, est refroidi par passage dans un bain d'eau froide, puis il est granulé et séché.

Le polymère obtenu est parfaitement transparent et donc homogène. Il présente les caractéristiques suivantes mesurées sur les granulés secs :

- point de fusion (Tf) : 240 °C,
- point de cristallisation au refroidissement (Tc) : 186 °C,
- taux de groupes terminaux :
  - COOH : 85,62 meq/kg
  - $NH_2$ : 4,92 meq/kg
- viscosité à l'état fondu à 260 °C sous un gradient de cisaillement : $\gamma = 10\ s^{-1}$ : 11 000 poises.
- propriétés mécaniques en traction :
  - résistance à la rupture : 64,3 MPa,
  - allongement à la rupture : 260 %,
  - module en traction : 760 MPa,
- propriétés thermomécaniques en torsion ; module de torsion à :
  - -20 °C : 690 MPa,
  - 0 °C : 660 MPa,
  - +20 °C : 580 MPa,
  - +40 °C : 320 MPa,
  - +60 °C : 150 MPa.

## EXEMPLE COMPARATIF A

Dans cet exemple on montre (toutes les autres conditions opératoires de l'invention étant respectées) que, lorsque la quantité d'eau présente au départ dans le mélange réactionnel (exprimée en pourcentage en poids par rapport à l'ensemble eau présente au départ + réactifs) est supérieure à 45 %, le polymère obtenu est opaque et hétérogène.

On opère dans un autoclave en acier inoxydable de 7,5 l équipé comme indiqué à l'exemple 1.

### Etape (a) :

Charges :

- sel à l'état solide et sec d'acide adipique et d'hexaméthylènediamine : 2086,7 g (7,955 moles),
- eau permutée : 1825,4 g,
- hexaméthylènediamine en solution aqueuse à 32,5 % en poids : 746,5 g, soit 242,6 g d'hexaméthylènediamine (2,088 moles) et 503,9 g d'eau de dissolution,
- acide hypophosphoreux en solution aqueuse à 50 % en poids : 6 g, soit 3 g d'eau de dissolution,
- antimousse silicone de l'exemple 1 : 0,2 g.

Pour ces charges, la quantité d'eau présente au départ dans le mélange réactionnel est égale à 2332,3 g et elle représente 50 % en poids de l'ensemble eau présente au départ + réactifs.

Le mode opératoire est identique à celui indiqué à l'exemple 1.

### Etape (b) :

Charges :

- acide dimère : 1140 g (1,996 moles).

Le mode opératoire est identique à celui indiqué à l'exemple 1 avec seulement les variantes suivantes :

A la fin de l'addition de l'acide dimère, on recueille par distillation 2091 g d'eau ; le poids d'eau

résiduelle est de 241,3 g et le rapport $r_1$ présente là aussi une valeur de 0,935.

La pression réduite qui est établie est de $400.10^2$ Pa.

Le polymère obtenu est opaque et donc hétérogène. Il présente les caractéristiques suivantes mesurées sur les granulés secs.

- point de fusion (Tf) : 248 °C,
- point de cristallisation au refroidissement (Tc) : 188 °C,
- taux de groupes terminaux :
  . COOH : 32,7 meq/kg
  . $NH_2$ : 25,5 meq/kg.

EXEMPLE COMPARATIF B

Dans cet exemple on monte (toutes les autres conditions opératoires de l'invention étant respectées) que, lorsque à la fin de la période d'addition de l'acide dimère le rapport $r_1$ présente une valeur inférieure à 0,915, le polymère obtenu est opaque et hétérogène.

On opère dans un autoclave en acier inoxydable de 7,5 litres équipé comme indiqué à l'exemple 1.

Etape (a) :

Charges :

- sel à l'état solide et sec d'acide adipique et d'hexaméthylènediamine : 2086,7 g (7,955 moles),
- eau permutée : 1048 g,
- hexaméthylènediamine en solution aqueuse à 32,5 % poids : 746,5 g, soit 242,6 g d'hexaméthylènediamine (2,088 moles) et 503,9 g d'eau de dissolution,
- acide hypophosphoreux en solution aqueuse à 50 % en poids : 6 g, soit 3 g d'eau de dissolution,
- antimousse silicone de l'exemple 1 : 0,2 g.

Pour ces charges, la quantité d'eau présente au départ dans le mélange réactionnel est égale à 1554,9 g et elle représente 40 % en poids de l'ensemble eau présente au départ + réactifs.

Le mode opératoire est identique à celui indiqué à l'exemple 1.

Etape (b) :

Charges :

- acide dimère : 1140 g (1,996 moles).

Le mode opératoire est identique à celui indiqué à l'exemple 1 avec seulement les variantes suivantes :

A la fin de l'addition de l'acide dimère, on recueille par distillation 1170 g d'eau ; le poids d'eau résiduelle est de 384,9 g et le rapport $r_1$ présente alors une valeur de 0,900.

La pression réduite qui est établie est de $500.10^2$ Pa.

Le polymère obtenu est opaque et donc hétérogène. Il présente les caractéristiques suivantes mesurées sur les granulés secs.

- point de fusion (Tf) : 245 °C,
- point de cristallisation au refroidissement (Tc) : 189 °C,

EXEMPLE 2

On opère dans un autoclave en acier inoxydable de 7,5 l équipé comme indiqué à l'exemple 1.

Etape (a) :

Charges :

- sel à l'état solide et sec d'acide adipique et d'hexaméthylènediamine : 1739 g (6,629 moles),
- eau permutée : 203,6 g,
- hexaméthylènediamine pure : 177,5 g (1,527 moles)
- acide hypophosphoreux en solution aqueuse à 50 % en poids : 2,5 g soit 1,25 g d'eau de dissolution,
- antimousse silicone de l'exemple 1 : 0,2 g.

Pour ces charges, la quantité d'eau présente au départ dans le mélange réactionnel est égale à 204,85 g et elle représente 9,65 % en poids de l'ensemble eau présente au départ + réactifs.

L'agitation est mise en route en on effectue 5 purges à l'azote par mise sous pression de $7.10^5$ Pa, puis décompression. La température de la masse agitée est élevée progressivement en 1 heure jusqu'à 210 °C (pression autogène de 1,4 MPa) et on laisse réagir les réaotifs dans ces conditions pendant 30 minutes.

Etape (b) :

En maintenant les conditions de température et de pression précitées, on introduit dans le milieu agité par coulée régulière en 40 minutes, 872 g (1,527 moles) de dimère d'acide gras commercialisé sous la marque déposée PRIPOL 1010 par la Société UNICHEMA CHEMIE ayant un taux de monomère de 0,03 % en poids et un taux de trimère de 3 % en poids ; pendant le temps d'addition de l'acide dimère, on n'opère pas une distillation d'eau et la pression autogène s'élève à 1,7 MPa.

A la fin de l'addition de l'acide dimère le poids d'eau résiduelle est de 204,85 g et le rapport $r_1$ défini ci-avant dans le présent mémoire présente une valeur égale à 0,932.

L'autoclave est ensuite décomprimé progressivement, pendant une durée de 1 heure 40 minutes, jusqu'à la pression atmosphérique et la température est élevée progressivement dans le même temps jusqu'à 260 °C tout en distillant simultanément de l'eau.

On établit ensuite progressivement en 30 minutes une pression de $500.10^2$ Pa tout en maintenant la masse à 260C° et on termine la polycondensation en continuant à agiter le milieu à 260 °C sous $120.10^2$ Pa pendant 40 minutes tout en assurant encore une distillation régulière d'eau.

La perte en hexaméthylènediamine mesurée en fin de l'étape (b) est de 0,15 %.

L'agitation est arrêtée, puis on établit dans l'autoclave une pression d'azote de $5.10^5$ Pa et on soutire le polymère. Ce dernier extrudé de l'autoclave sous forme de jonc, est refroidi par passage dans un bain d'eau froide, puis il est granulé et séché.

Le polymère obtenu est parfaitement transparent et donc homogène. Il présente les caractéristiques suivantes mesurée sur les granulés secs:

- point de fusion (Tf) : 242 °C,
- point de cristallisation au refroidissement (Tc) : 194 °C,
- taux de groupes terminaux :
  - COOH : 60,16 meq/kg
  - $NH_2$ : 19,78 meq/kg
- viscosité à l'état fondu à 260 °C sous un gradient de cisaillement : $\gamma = 10\ s^{-1}$ : 26 000 poises.
- propriétés mécaniques en traction :
  - résistance à la rupture : 72 MPa,
  - allongement à la rupture : 350 %,
  - module en traction : 630 MPa,
- propriétés thermomécaniques en torsion ; module de torsion à :
  - -20 °C : 720 MPa,
  - 0 °C : 700 MPa,
  - +20 °C : 580 MPa,
  - +40 °C : 320 MPa,
  - +60 °C : 160 MPa.

**Revendications**

**1.** Procédé de préparation de copolyamides homogènes, ayant à la fois un point de fusion élevé et une bonne souplesse, à partir d'hexaméthylènediamine, de diacide(s) carboxylique(s) ayant au plus 12 atomes de carbone et d'un dimère d'acide gras qui est pris dans le groupe formé par les acides dimères obtenus par polymérisation de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone, ledit procédé étant caractérisé par les points suivants :

- dans une première étape (a), on prépare un prépolymère à groupements terminaux aminés en faisant réagir, en présence ou non d'eau, au départ de cette étape, les composés consistant :
  - (i) soit dans le mélange des constituants suivants : acide(s) court(s) consistant dans l'acide adipique, pris seul ou en mélange avec au moins un autre diacide carboxylique de nature cycloaliphatique saturée ou aromatique ayant au plus 12 atomes de carbone + hexaméthylènediamine + catalyseur consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pKa dans l'eau à 25 °C égale ou inférieure à 4, (béta) désignant un sel alcalin ou alcalino-terreux de cet acide,

- (ii) soit dans le mélange des constituants suivants : sel(s) stoechiométrique(s) d'acide(s) court-(s) précité(s) et d'hexaméthylènediamine + hexaméthylènediamine libre + catalyseur défini ci-avant, cette première étape (a) étant conduite sans opérer de distillation d'eau dans un système clos du type autoclave dans les conditions suivantes :
  . la quantité d'eau présente au départ dans le mélange réactionnel, quand il y en a, exprimée en pourcentage en poids par rapport à la quantité totale eau présente au départ + réactifs, est au plus égale à 45 %,
  . on amène progressivement par chauffage le mélange de départ à une température se situant dans l'intevalle allant de 200 à 250 °C et on laisse réagir les réactifs à cette température et sous une pression autogène supérieure à la pression atmosphérique pendant une durée suffisante pour permettre d'amener le mélange réactionnel à l'état d'équilibre chimique des réactions d'amidification correspondant au début de l'étape (b) suivante ;

- dans une seconde étape (b), on fait réagir le prépolymère obtenu avec le dimère d'acide gras, qui est ajouté progressivement dans le mélange réactionnel, en respectant les points suivants :
  . on opère à une température se situant dans l'intervalle allant de 200 à 280 °C,
  . on opère sous une pression autogène qui, pendant la période d'addition de l'acide dimère, est égale à la pression de prépolymérisation (cas a) ou est supérieure à cette pression (cas b) ou décroît progressivement de la pression de prépolymérisation jusqu'à la pression atmosphérique (cas c) et qui, après l'addition de l'acide dimère, décroit progressivement jusqu'à une valeur pouvant être la pression atmosphèrique (pour les cas a et b) ou une pression inférieure à cette dernière (pour les cas a, b et c) ou reste égale à la pression atmosphérique (pour le cas c),
  . on assure une distillation simultanée d'eau d'une part éventuellement pendant la période d'addition de l'acide dimère et d'autre part pendant la période suivant l'addition de l'acide dimère,
  . on veille à ce que, à la fin de la période d'addition de l'acide dimère, au besoin en éliminant par distillation de l'eau pendant la période d'addition de l'acide dimère, le rapport $r_1$ ci-après défini :

$$\frac{\text{poids réactifs de l'étape (a) + poids acide dimère}}{\text{poids réactifs de l'étape (a) + poids acide dimère + poids d'eau résiduelle}}$$

  présente une valeur se situant dans l'intervalle allant de 0,915 à 1,
  . et on fait réagir l'acide dimère, une fois ce dernier complètement engagé, pendant une durée suffisante pour obtenir un copolyamide de viscosité souhaitée,

- les proportions des divers constituants sont telles que :
  - la quantité d'acides(s) court(s) par rapport à l'ensemble acide(s) court(s) + acide dimère va de 50 à 99 % en mole,
  - le rapport $r_2$ du nombre de moles d'hexaméthylènediamine mises en oeuvre dans l'étape (a), alternative (i), par rapport au nombre total de moles d'acide(s) court(s) et d'acide dimère est égal à 1 ou éventuellement égal à une valeur, supérieure à la stoechiométrie, déterminée de manière à introduire dans le mélange réactionnel un excès d'hexaméthylènediamine permettant de compenser la perte de ce réactif qui peut intervenir lors de l'étape (b) pendant la décompression,
  - le rapport $r_3$ du nombre de moles d'hexaméthylènediamine libre mises en oeuvre dans l'étape (a), alternative (ii), par rapport au nombre de moles d'acide dimère possède les valeurs indiquées ci-avant pour le rapport $r_2$.

**2.** Procédé selon la revendication 1, caractérisé en ce qu'il consiste à enchaîner les étapes (a) et (b) mais

avec une présence d'eau dans le mélange réactionnel au départ de l'étape (a), la quantité d'eau présente au départ étant au plus égale à 45 %.

3. Procédé selon l'une quelconque des revendications 1 ou 2 caractérisé en ce que les acides courts employés consistent dans l'acide adipique pris seul ou en mélange avec au moins un autre diacide carboxylique pris dans le groupe formé par l'acide cyclohexanedicarboxylique-1,4, l'acide isophtalique, l'acide téréphtalique, la proportion d'acide adipique dans le mélange représentant au 70 % en mole.

4. Procédé selon l'une quelconque des revendications 1 à 3, caractérisé en ce que les acides dimères employés sont des acides gras polymères fractionnés dans lesquels la fraction en acide difonctionnel est supérieure à 94 % en poids, la fraction en acide monofonctionnel est inférieure à 1 % en poids et la fraction en acide de fonctionnalité supérieure à 2 est inférieure à 5 % en poids.

5. Procédé selon la revendication 4, caractérisé en ce que les acides dimères auxquels on fait appel consistent dans les espèces obtenues par fractionnement d'une composition hydrogénée issue de la polymérisation catalytique d'acide(s) gras monomère(s) ayant 18 atomes de carbone.

6. Procédé selon l'une quelconque des revendications 1 à 5, caractérisé en ce que le catalyseur (alpha) auquel on fait appel consiste dans les espèces suivantes :
   - parmi les oxyacides minéraux, les acides sulfureux, sulfurique, hypophosphoreux, phosphoreux, orthophosphorique ou pyrophosphorique ;
   - parmi les oxyacides organiques :
     - les acides organosulfoniques de formule $R_1$--$SO_3H$ (I) dans laquelle $R_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;
     - les acides organophosphoniques de formule $R_2$ - $P(O)(OH)_2$ (II) dans laquelle $R_2$ représente un radical alkyle, un radical phényle ou un radical phénylalkyle, chacun de ces radicaux ayant la définition donnée ci-avant pour $R_1$ :
     - les acides organophosphiniques de formule $R_3R_4$ - $P(O)(OH)$ (III) dans laquelle $R_3$ et $R_4$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;
     - les acides organophosphoneux de formule $R_5H$ - $P(O)(OH)$ (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_1$.

7. Procédé selon la revendication 6, caractérisé en ce que les acides (alpha) auxquels on fait appel consistent dans les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

8. Procédé selon l'une quelconque des revendications 1 à 5, caractérisé en ce que le catalyseur (béta) auquel on fait appel consiste dans les sels de sodium et de potassium issus des acides cités ci-avant dans la revendication 6 et, de préférence, dans les sels de sodium et de potassium issus des acides dérivés du phosphore cités ci-avant dans la revendication 7.

9. Procédé selon l'une quelconque des revendications 6 à 8, caractérisé en ce que les proportions d'acide fort (alpha) ou de sel (béta), exprimées en pourcentage en poids par rapport au copolyamide final, sont comprises généralement entre 0,01 et 1 % et de préférence entre 0,01 et 0,5 %.

**Claims**

1. Process for the preparation of homogeneous copolyamides having both a high melting point and good flexibility, from hexamethylenediamine, dicarboxylic acid(s) containing not more than 12 carbon atoms and a fatty acid dimer taken from the group of dimer acids obtained by polymerisation of compounds containing 80 to 100 % by weight of monomeric fatty acid(s) containing from 16 to 20 carbon atoms and 20 to 0 % by weight of monomeric fatty acid(s) containing from 8 to 15 carbon atoms and/or from 21 to 24 carbon atoms, the said process being characterised by the following points:
   - in a first step (a), a prepolymer having amino end groups is prepared by reacting, optionally in the presence of water at the beginning of this step, the compounds consisting:
     - (i) either of a mixture of the following constituents: short acids(s) consisting of adipic acid, taken by itself or in a mixture with at least one other dicarboxylic acid of a saturated cycloaliphatic or aromatic type containing not more than 12 carbon atoms + hexamethylenediamine + a catalyst consisting either of a compound (alpha) or of a compound (beta), (alpha) denoting an inorganic oxyacid or an organic oxyacid other than a carboxylic acid, in which at least one of the acid groups, when there are several of these, has an ionisation constant pKa in water at 25° C which does not exceed 4, (beta) denoting an alkali metal or alkaline-earth metal salt of this acid,
     - (ii) or of a mixture of the following constituents: stoichiometric salt(s) of the abovementioned short acid(s) with hexamethylenediamine + free hexamethylenediamine + the catalyst defined above, this first step (a) being carried out, without performing water distillation in a closed system of the autoclave type, under the following conditions:
       - the quantity of water initially present, when there is any, in the reaction mixture expressed as a percentage by weight based on the total quantity of water initially present + reactants does not exceed 45%,
       - the starting mixture is raised gradually, by heating, to a temperature situated in the range from 200 to 250° C and the reactants are allowed to react at this temperature and at an autogenous pressure which is higher than atmospheric pressure for a period of time which is sufficient to enable the reaction mixture to reach the state of chemical equilibrium of the amidification reactions corresponding to the beginning of the following step (b);
   - in a second step (b), the prepolymer obtained is reacted with the fatty acid dimer, which is added gradually to the reaction mixture, the following points being observed:
     - the operation is carried out at a temperature situated in the range from 200 to 280° C,
     - the operation is carried out at an autogenous pressure which, during the period of addition of the dimer acid, is equal to the prepolymerisation pressure (case a) or is higher than this pressure (case b) or decreases gradually from the prepolymerisation pressure to atmospheric pressure (case c) and which, after the addition of the dimer acid, decreases gradually to a value which may be atmospheric pressure (in cases a and b) or a pressure which is lower than the latter (in cases a, b and c) or remains equal to atmospheric pressure (in case c),
     - a simultaneous distillation of water is ensured, on the one hand, if desired, during the period of addition of the dimer acid and, on the other hand, during the period following the addition of the dimer acid,
     - care is taken that, at the end of the period of addition of the dimer acid, the ratio $r_1$ defined below:

$$\frac{\text{weight of reactants in step (a)} + \text{weight of dimer acid}}{\text{weight of reactants in step (a)} + \text{weight of dimer acid} + \text{weight of residual water}}$$

       has a value situated in the range from 0.915 to 1, if need be by removing water by distillation during the period of addition of the dimer acid, and
     - the dimer acid, once its introduction is complete, is reacted for a period which is sufficient to produce a copolyamide with the required viscosity,
   - the proportions of the various constituents are such that:
     - the quantity of short acid(s) relative to the total of short acid(s) + dimer acid ranges from 50 to

99 mol%,
- the ratio $r_2$ of the number of moles of hexamethylenediamine employed in step (a), variant (i), relative to the total number of moles of short acid(s) and of dimer acid is equal to 1 or optionally equal to a value which is higher than the stoichiometry and is determined so as to introduce into the reaction mixture an excess of hexamethylenediamine which makes it possible to compensate for the loss of this reactant which may occur in step (b) during the pressure release,
- the ratio $r_3$ of the number of moles of free hexamethylenediamine employed in step (a), variant (ii), relative to the number of moles of dimer acid has the values indicated above for the ratio $r_2$.

**2.** Process according to Claim 1, characterised in that the steps (a) and (b) are performed as a sequence, but with a presence of water in the reaction mixture at the beginning of step (a), the quantity of water initially present not exceeding 45%.

**3.** Process according to either of Claims 1 and 2, characterised in that the short acids used consist of adipic acid by itself or mixed with at least one other dicarboxylic acid taken from the group consisting of 1,4-cyclohexanedicarboxylic acid, isophthalic acid, and terephthalic acid, the proportion of adipic acid in the mixture representing at least 70 mol%.

**4.** Process according to any one of Claims 1 to 3, characterised in that the dimer acids used are fractionated polymeric fatty acids in which the difunctional acid fraction is greater than 94% by weight, the monofunctional acid fraction is less than 1% by weight and the fraction of acid of functionality greater than 2 is less than 5% by weight.

**5.** Process according to Claim 4, characterised in that the dimer acids which are used consist of the species obtained by fractionation of a hydrogenated composition originating from the catalytic polymerisation of monomeric fatty acid(s) containing 18 carbon atoms.

**6.** Process according to any one of Claims 1 to 5, characterised in that the catalyst (alpha) which is used consists of the following species:
- among the inorganic oxyacids: sulphurous, sulphuric, hypophosphorous, phosphorous, orthophosphoric or pyrophosphoric acids;
- among the organic oxyacids:
  - the organosulphonic acids of formula $R_1$-$SO_3H$ (I) in which $R_1$ denotes: a straight-chain or branched alkyl radical containing from 1 to 6 carbon atoms; a phenyl radical optionally substituted by 1 to 3 alkyl radicals containing from 1 to 3 carbon atoms, a phenylalkyl radical containing from 1 to 3 carbon atoms in the alkyl moiety and in which the benzene nucleus may optionally be substituted by 1 to 3 alkyl radicals containing from 1 to 3 carbon atoms; or a naphthyl radical optionally substituted by 1 to 4 alkyl radicals containing from 1 to 3 carbon atoms;
  - the organophosphonic acids of formula $R_2$-P(O)$(OH)_2$ (II) in which $R_2$ denotes an alkyl radical, a phenyl radical or a phenylalkyl radical, each of these radicals having the definition given above for $R_1$;
  - the organophosphinic acids of formula $R_3R_4$-P(O)(OH) (III) in which $R_3$ and $R_4$, which are identical or different, each denote: a straight-chain alkyl radical containing from 1 to 3 carbon atoms; a phenyl radical or a phenylalkyl radical, each of the latter two radicals having the definition given above for $R_1$;
  - the organophosphonous acids of formula $R_5$H-P(O)(OH) (IV) in which $R_5$ denotes: a straight-chain or branched alkyl radical containing from 1 to 4 carbon atoms (the branching being excluded in the case of an alkyl radical containing 4 carbon atoms); a phenyl radical or a phenylalkyl radical, each of the latter two radicals having the definition given above for $R_1$.

**7.** Process according to Claim 6, characterised in that the acids (alpha) which are used consist of the phosphorous-derived acids belonging to the group of hypophosphorous, phosphorous, orthophosphoric, pyrophosphoric, methylphosphonic, phenylphosphonic, benzylphosphonic, dimethylphosphinic, diphenylphosphinic, methylphenylphosphinic, dibenzylphosphinic, methylphosphonous, phenylphosphonous or benzylphosphonous acids.

8. Process according to any one of Claims 1 to 5, characterised in that the catalyst (beta) which is used consists of the sodium and potassium salts derived from the acids referred to above in Claim 6 and, preferably, of the sodium and potassium salts originating from the phosphorus-derived acids mentioned above in Claim 7.

9. Process according to any one of Claims 6 to 8, characterised in that the proportions of strong acid (alpha) or of salt (beta), expressed as a weight percentage relative to the final copolyamide, are generally between 0.01 and 1% and preferably between 0.01 and 0.05%.

## Patentansprüche

1. Verfahren zur Herstellung von homogenen Copolyamiden, die gleichzeitig einen hohen Schmelzpunkt und eine gute Biegsamkeit haben, ausgehend von Hexamethylendiamin, Dicarbonsäure/n mit höchstens 12 Kohlenstoffatomen und einem Fettsäuredimeren, das genommen ist aus der Gruppe gebildet durch die dimeren Säuren, erhalten durch Polymerisation von Verbindungen mit 80 bis 100 Gew.-% monomerer/n Fettsäure/n mit 16 bis 20 Kohlenstoffatomen und 20 bis 0 Gew.-% monomerer/n Fettsäure/n mit 8 bis 15 Kohlenstoffatomen und/oder 21 bis 24 Kohlenstoffatomen, wobei dieses Verfahren durch die folgenden Punkte gekennzeichnet ist:

- in einer ersten Stufe (a) stellt man ein Präpolymeres mit endständigen Aminogruppen her, indem in Gegenwart oder nicht von Wasser zu Beginn dieser Stufe reagieren gelassen werden die Verbindungen bestehend aus:

  (i) entweder aus dem Gemisch der folgenden Bestandteile: kurze Säure/n bestehend aus Adipinsäure, allein genommen oder im Gemisch mit mindestens einer anderen Dicarbonsäure, gesättigter cycloaliphatischer oder aromatischer Natur mit höchstens 12 Kohlenstoffatomen, + Hexamethylendiamin + Katalysator, bestehend entweder aus einer Verbindung (alpha) oder einer Verbindung (beta), wobei (alpha) eine mineralische Oxysäure oder eine organische Oxysäure anders als eine Carbonsäure bezeichnet, wovon mindestens eine der Säurefunktionen, falls es mehrere gibt, eine Ionisationskonstante pKa in Wasser bei 25 °C gleich oder unter 4 besitzt, und (beta) ein Alkali- oder Erdalkalisalz dieser Säure bedeutet,
  (ii) oder aus dem Gemisch der folgenden Bestandteile stöchiometrische/s Salz/e der vorerwähnten kurzen Säure/n mit Hexamethylendiamin + freies Hexamethylendiamin + vorstehend definierter Katalysator,

  wobei diese erste Stufe (a) durchgeführt wird ohne Destillation von Wasser, in einem geschlossenen System vom Typ Autoklav unter den folgenden Bedingungen:

  . die zu Beginn in dem Reaktionsgemisch vorhandene Wassermenge, wenn es vorhanden ist, ausgedrückt in Gewichtsprozent in bezug auf die gesamte Wassermenge, vorhanden zu Beginn + Reaktanten, ist höchstens gleich 45 %,
  . man führt das Ausgangsgemisch fortschreitend durch Erhitzen auf eine Temperatur in dem Bereich von 200 bis 250 °C und läßt die Reaktanten bei dieser Temperatur und unter einem autogenen Druck höher als Atmosphärendruck während einer Zeitdauer reagieren, die ausreicht, um zu erlauben, das Reaktionsgemisch in den Zustand des chemischen Gleichgewichts der Amidifikationsreaktionen entsprechend dem Beginn der folgenden Stufe (b) zu führen;
- in einer zweiten Stufe (b) läßt man das erhaltene Präpolymere mit der dimeren Fettsäure reagieren, die fortschreitend in das Reaktionsgemisch zugegeben wird, indem die folgenden Punkte beachtet werden:

  . man arbeitet bei einer Temperatur im Bereich von 200 bis 280 °C,
  . man arbeitet unter einem autogenen Druck, der während der Zugabeperiode der dimeren Säure gleich dem Präpolymerisationsdruck ist (Fall a) oder höher als dieser Druck ist (Fall b), oder fortschreitend von dem Präpolymerisationsdruck bis zu Atmosphärendruck absinkt (Fall c) und der nach Zugabe der dimeren Säure fortschreitend absinkt bis auf einen Wert, der atmosphärischer Druck (für die Fälle a und b) oder ein Druck unterhalb dieses letzteren (für die Fälle a, b und c) sein kann, oder gleich dem Atmosphärendruck bleibt (für den Fall c),
  . man stellt eine gleichzeitige Destillation von Wasser einerseits gegebenenfalls während der

Zugabeperiode der dimeren Säure und andererseits während der Periode, die der Zugabe der dimeren Säure folgt, sicher,

. man achtet darauf, daß am Ende der Zugabeperiode der dimeren Säure, falls erforderlich, indem Wasser während der Zugabeperiode der dimeren Säure durch Destillation entfernt wird, das nachstehend definierte Verhältnis $r_1$:

$$\frac{\text{Gewicht der Reaktanten der Stufe (a)} + \text{Gewicht dimere Säure}}{\text{Gewicht der Reaktanten der Stufe (a)} + \text{Gewicht dimere Säure} + \text{Gewicht Restwasser}}$$

einen Wert aufweist, der im Bereich von 0,915 bis 1 liegt,

. und man läßt die dimere Säure, wenn diese letztere einmal vollständig eingesetzt ist, während einer ausreichenden Zeitdauer reagieren, um ein Copolyamid der gewünschten Viskosität zu erhalten,

- die Mengenverhältnisse der verschiedenen Bestandteile sind derart daß:
- die Menge an kurzer/n Säure/n in bezug auf die Gesamtheit kurze Säure/n + dimere Säure von 50 bis 99 Mol-% geht,
- das Verhältnis $r_2$ der Zahl der Mole Hexamethylendiamin, die in der Stufe (a), Alternative (i), eingesetzt sind, in bezug auf die Gesamtzahl der Mole kurze Säure/n und dimere Säure gleich 1 ist oder gegebenenfalls gleich einem Wert, der über der Stöchiometrie ist, bestimmt derart, daß in das Reaktionsgemisch ein Überschuß an Hexamethylendiamin eingeführt wird, der es erlaubt, den Verlust dieses Reaktanten, der während der Stufe (b) während der Druckverminderung auftreten kann, zu kompensieren,
- das Verhältnis $r_3$ der Zahl der Mole freies Hexamethylendiamin, die in Stufe (a), Alternative (ii), eingesetzt werden, in bezug auf die Zahl der Mole an dimerer Säure besitzt die vorstehend angegebenen Werte für das Verhältnis $r_2$.

**2.** Verfahren gemäß Anspruch 1, dadurch gekennzeichnet, daß es darin besteht, die Stufen (a) und (b) aneinander zu reihen, jedoch mit Anwesenheit von Wasser in dem Reaktionsgemisch zu Beginn der Stufe (a), wobei die zu Beginn vorhandene Wassermenge höchstens gleich 45 % beträgt.

**3.** Verfahren gemäß einem der Ansprüche 1 oder 2, dadurch gekennzeichnet, daß die verwendeten kurzen Säuren in der Adipinsäure allein genommen oder in einem Gemisch mit mindestens einer anderen Dicarbonsäure bestehen, genommen aus der Gruppe gebildet durch die 1,4-Cyclohexandicarbonsäure, die Isophthalsäure, die Terephthalsäure, wobei das Mengenverhältnis von Adipinsäure in dem Gemisch mindestens 70 Mol-% beträgt.

**4.** Verfahren gemäß einem der Ansprüche 1 bis 3, dadurch gekennzeichnet, daß die verwendeten dimeren Säuren fraktionierte polymere Fettsäuren sind, worin die Fraktion an difunktioneller Säure über 94 Gew.-% ist, die Fraktion an monofunktioneller Säure unter 1 Gew.-% ist, und die Fraktion an Säure mit einer Funktionalität höher als 2 unter 5 Gew.-% ist.

**5.** Verfahren gemäß Anspruch 4, dadurch gekennzeichnet, daß die dimeren Säuren, die verwendet werden, aus Gattungen bestehen, die durch Fraktionierung einer hydrierten Zusammensetzung erhalten wurden, welche von der katalytischen Polymerisation monomerer Fettsäure/n mit 18 Kohlenstoffatomen stammen.

**6.** Verfahren gemäß einem der Ansprüche 1 bis 5, dadurch gekennzeichnet, daß der Katalysator (alpha), der verwendet wird, aus den folgenden Sorten besteht:

- unter den mineralischen Oxysäuren die schweflige Säure, Schwefelsäure, hypophosphorige Säure, phosphorige Säure, Orthophosphorsäure oder Pyrophosphorsäure;
- unter den organischen Oxysäuren:die Organosulfonsäuren der Formel $R_1$-$SO_3H$ (I), worin $R_1$ bedeutet: einen linearen oder verzweigten Alkylrest mit 1 bis 6 Kohlenstoffatomen; einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest und dessen Benzolring gegebenenfalls

substituiert sein kann durch 1 bis 3 Alkylreste mit 1 bis 3 Kohlenstoffatomen; oder einen Naphthylrest, gegebenenfalls substituiert durch 1 bis 4 Alkylreste mit 1 bis 3 Kohlenstoffatomen;

- die Organophosphonsäuren der Formel $R_2$-P(O)(OH)$_2$ (II), worin $R_2$ einen Alkylrest, einen Phenylrest oder einen Phenylalkylrest bedeutet, wobei jeder dieser Reste die vorstehend für $R_1$ angegebene Definition hat;
- die Organophosphinsäuren der Formel $R_3R_4$-P(O)(OH) (III), worin $R_3$ und $R_4$, die identisch oder verschieden sind, jeweils bedeuten: einen linearen Alkylrest mit 1 bis 3 Kohlenstoffatomen; einen Phenylrest oder einen Phenylalkylrest, wobei jeder dieser beiden letzteren Reste die vorstehend für $R_1$ angegebene Definition hat;
- die organophosphonigen Säuren der Formel $R_5$H-P(O)(OH) (IV), worin $R_5$ bedeutet: einen linearen oder verzweigten Alkylrest mit 1 bis 4 Kohlenstoffatomen (die Verzweigung für einen Alkylrest mit 4 Kohlenstoffatomen ist ausgeschlossen); einen Phenylrest oder einen Phenylalkylrest, wobei jeder dieser zwei letzteren Reste die vorstehend für $R_1$ angegebene Definition hat.

**7.** Verfahren gemäß Anspruch 6, dadurch gekennzeichnet, daß die Säuren (alpha), welche verwendet werden, in den Säuren, die von Phosphor abgeleitet sind, bestehen, gehörend zu der Gruppe der hypophosphorigen, phosphorigen, Orthophosphor-, Pyrophosphor-, Methylphosphon-, Phenylphosphon-, Benzylphosphon-, Dimethylphosphin-, Diphenylphosphin-, Methylphenylphosphin-, Dibenzylphosphin-, methylphosphonigen, phenylphosphonigen oder benzylphosphonigen Säure.

**8.** Verfahren gemäß einem der Ansprüche 1 bis 5, dadurch gekennzeichnet, daß der Katalysator (beta), der verwendet wird, in den Natrium- und Kaliumsalzen der vorstehend in Anspruch 6 erwähnten Säuren besteht und vorzugsweise in den Natrium- und Kaliumsalzen der Säuren, abgeleitet von Phosphor, die vorstehend in Anspruch 7 erwähnt sind.

**9.** Verfahren gemäß einem der Ansprüche 6 bis 8, dadurch gekennzeichnet, daß die Mengenverhältnisse an starker Säure (alpha) oder Salz (beta), ausgedrückt in Gewichtsprozent in bezug auf das Endcopolyamid, im allgemeinen zwischen 0,01 und 1 % und vorzugsweise zwischen 0,01 und 0,5 % liegen.